# EUROPEAN PATENT APPLICATION

(11) **EP 1 714 827 A2**
(43) Date of publication of application: **25.10.2006**
(21) Application number: 06252192.7
(22) Date of filing: 24.04.2006
(51) Int. Cl.: B60N 2/48, B60N 2/42, B60N 2/427

(54) **Active headrest arrangement**

(30) Priority: 22.04.2005 JP 2005125097
(71) Applicant: NISSAN MOTOR CO., LTD., Yokohama-shi, Kanagawa 221-0023 (JP)
(72) Inventor: Sugimoto, Yousuke, c/o Nissan Motor Co., Ltd, Yokohama-shi Kanagawa 221-0023 (JP)
(74) Representative: Holmes, Matthew William

(57) **Abstract**

An active headrest structure that can be disposed without damaging the board member on the back surface of the seat back is provided. On the back surface of seat back 18 is provided backboard 20, which is approximately a board shape and disposed apart from arm member 4 in the front to rear direction of the vehicle. Top portion 20b of backboard member 20 and arm member 4 are connected by spring member 23 as the elastic member.

## Description

The present invention relates to an active headrest arrangement and particularly, but not exclusively, to an active head rest structure for a vehicle seat having a back board or the like. The invention also relates to a headrest mechanism, to a headrest structure, to a seat, to a method and to a vehicle.

An active headrest structure is known in which a pressure-receiving member provided on an arm member is fastened to the seat back covering material, which is stretched over the rear surface of the seat back, with a hook member. (See Unexamined Japanese Patent Application Publication No. 2004-106657)

When a load is applied from the front part of the vehicle to the pressure-receiving member, the headrest is turned toward the front part of the vehicle.

However, when the aforementioned conventional active headrest structure is applied to a seat equipped with a flat, board-shaped board member on the rear surface of the seat back, the pressure-receiving member may interfere with the board member, resulting in possible damage to the board member when the active head rest mechanism operates causing the arm member to move toward the rear of the vehicle.

It is an aim of the invention to address this problem. Other aims and advantages of the invention will become apparent from the following description, claims and abstract.

Aspects of the invention therefore provide an arrangement, a seat, a method and a vehicle as set out in the appended claims.

According to another aspect of the invention, there is provided an active headrest structure comprising a seat back frame member, an arm member rockably supported to the seat back frame member, a headrest support member connected to the arm member, a headrest connected to and supported by the headrest support member, a backboard member disposed on the back surface of said seat back apart from the arm member, the backboard member rockably supported to the seat back frame member with the lower portion of the backboard member, and an elastic member connecting the top of the backboard member and the arm member.

According to another aspect of the invention there is provided a seat for a vehicle having an active headrest mechanism comprising a seat back, a headrest disposed on the upper portion of the seat back, an arm member disposed inside of the seat back, a headrest support member that supports the headrest, a backboard member disposed on the back surface of the seat back, the backboard member rockably supported to the seat back frame member with the lower portion of the backboard member, and an elastic member connecting the backboard member and the arm member, wherein the arm member is rockably supported via the headrest support member so that the headrest is turned toward the front part of the seat when a load is applied from the front.

In an embodiment, the backboard member is forced by the elastic member toward the front part of the vehicle when in a normal state.

In one embodiment, the elastic member is rubber that can be elastically deformed. In another embodiment, the elastic member is a spring member.

According to a further aspect of the invention there is provided a method of operating an active headrest structure, comprising turning a headrest mounted above a seat toward a front of a vehicle when a load is applied from the front of the vehicle and turning a backboard mounted to a back of the seat toward a rear of the vehicle when a load is applied from the front of the vehicle.

In an embodiment, turning the headrest comprises supporting the headrest on an arm member rockably supported to a seat frame back member and turning the headrest toward the front of the vehicle when a load is applied to the arm member from the front.

In an embodiment, turning the backboard comprises rotatably connecting the backboard at one end to the seat back connecting the backboard and the arm member with an elastic member and turning the backboard toward the rear of the vehicle when a load is applied to the arm member from the front.

According to a still further aspect of the invention there is provided an active headrest structure, comprising means for turning a headrest mounted above a seat toward a front of a vehicle when a load is applied from the front of the vehicle and means for turning a backboard mounted to a back of the seat toward a rear of the vehicle when a load is applied from the front of the vehicle.

The structure may be arranged to move the backboard generally towards the rear of the vehicle substantially simultaneously with the movement of the headrest towards the front of the vehicle.

In an embodiment the means for turning the headrest comprises means for supporting the headrest on an arm member rockably supported to a seat frame back member and means for turning the headrest toward the front of the vehicle when a load is applied to the arm member from the front.

In an embodiment the means for turning the backboard comprises means for rotatably connecting the backboard at one end to the seat back, means for connecting the backboard and the arm member with an elastic member and means for turning the backboard toward the rear of the vehicle when a load is applied to the arm member from the front.

An active headrest structure according to the invention may decrease the possible damage to the board member provided on the back surface of the seat back.

In an embodiment, an active headrest structure is comprised of a seat back, a headrest disposed on the upper of the seat back, an arm member disposed on the back surface of the seat back, and a connecting member connecting the backboard member and the arm member.

Under a normal state in which no load is applied to the arm member, the backboard member is positioned toward the front part of the vehicle. When a load is applied to the arm member from the front part of the vehicle, the headrest is turned toward the front part of the vehicle while said arm member is rockably moved toward the rear part of the vehicle. When this takes place, the load is transmitted to the backboard member from the front part of the vehicle by means of the connecting member causing the backboard member to be tilted back toward the rear of the vehicle.

The various aspects, embodiments and alternatives set out in the preceding paragraphs, in the claims and in the following description may be implemented individually or in combination.

The present invention will now be described, by way of example only, with reference to the accompanying drawings in which.
Fig. 1 is a cross section through a seat having an active headrest structure embodying the invention;
Fig. 2 is an enlarged cross section illustrating a lower portion of an active headrest structure embodying the invention; and
Fig. 3 is a cross section through the seat of Fig. 1 showing the active headrest structure in operation.

In the drawings, which are not necessarily shown to scale, as far as possible like reference numerals indicate like parts.

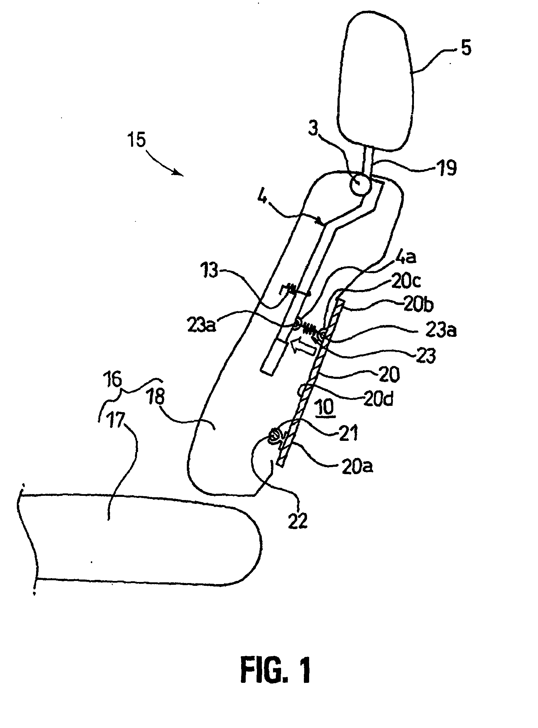

Referring firstly to Fig. 1, the active headrest structure for the present embodiment is associated with a front seat 16 inside of a passenger compartment 15 of the vehicle.

Front seat 16 consists of seat cushion 17 and seat back 18, and provided inside of seat back 18 is seat back frame member 3, comprising a metal pipe-shaped member. Additional details of the shape of the seat back frame member 3 are contained in U.S. Patent No. 4,491,365.

In addition, seat back frame member 3 is equipped with rockably supported arm member 4 and arm member 4 is connected to leg 19, which is the headrest support member that supports headrest 5 that is equipped on top of seat back 18.

In addition, provided inside of seat back 18 is spring 13, of which one end is fastened to the seat back frame also provided in seat back 18, but not shown in the drawing, and the other end is fastened to arm member 4. Force is applied by spring 13 to arm member 4 to pull it toward the front part of the vehicle.

Thus, a constitution is achieved for a so-called active headrest mechanism wherein headrest 5 is turned toward the front part of the vehicle when a predetermined load or more is applied to arm member 4 from the front part of the vehicle when it crashes.

In addition, for the present embodiment, provided on the back surface of seat back 18 is backboard 20, which is approximately a flat, board shape and is disposed apart from arm member 4 in the front to rear direction of the vehicle.

On seat inner surface 20d of lower portion 20a of backboard member 20 is mounted clip member 21 so that it protrudes.

Wire member 22 is joined to clip member 21 so as to axially rotate around the seat back frame (not shown in the drawing) inside of seat back 18 and backboard member 20 is axially supported to the seat back frame so that it can move freely.

In addition, disposed as a single body on seat inner surface 20d of top portion 20b of backboard member 20 is semi-circular fastening ring portion 20c so as to face semi-circular arm fastening ring member 4a, which is formed as a single body on arm member 4.

Top portion 20b of backboard member 20 and arm member 4 are connected by spring member 23 as the elastic member.

In other words, one end of hook 23a of spring member 23 is fastened to fastening ring member 20c, while the other end of hook 23a of spring member 23 is fastened to arm fastening ring member 4a so that spring member 23 is suspended between them.

Therefore, under a normal state in which a load is not applied to arm member 4, backboard member 20 operates to apply a force in the vicinity of arm member 4 in the front to rear direction of the vehicle by means of spring member 23.

Next is provided an explanation of the operation of the structure of Fig. 1.

Under a normal state in which a load is not applied to arm member 4, backboard member 20 is forced toward the front part of the vehicle by means of spring member 23 and is positioned toward the front part of the vehicle, so knee space 10 can be secured between the back surface of front seat 16 and the back seat.

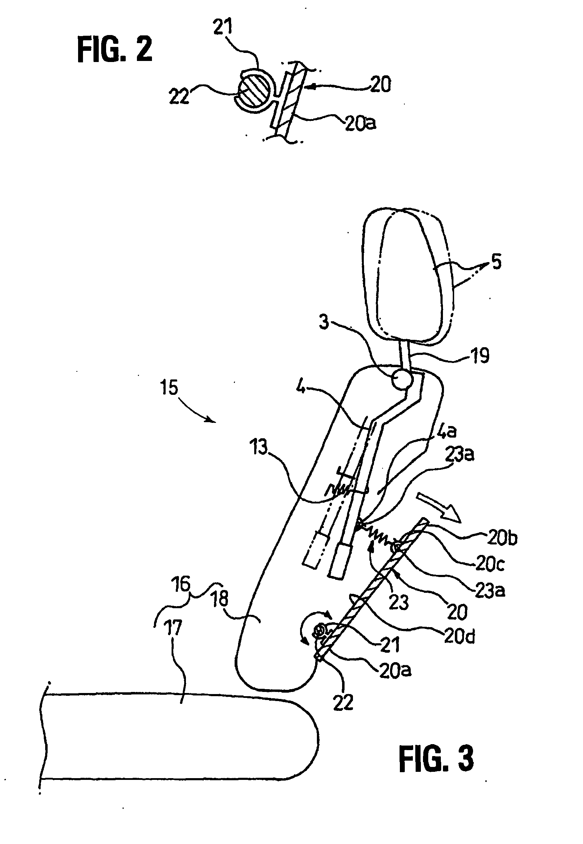

Then, as shown in Fig. 3 when a rearwardly directed load is applied to arm member 4, for example by the recoil of a seat occupant following a frontal impact or the rearward movement of the occupant during a rear impact, the lower portion of arm member 4 moves toward the rear of the vehicle and headrest 5 is turned toward the front part of the vehicle, as indicated by the solid line. As will be understood, this action is intended to reduce whiplash injury to the occupant.

Concurrently, the load is transmitted to top portion 20b of backboard member 20 via the spring member 23 such that the backboard member 20 is caused to pivot or rotate rearwardly (clockwise in the drawings) relative to the seat back about a pivot point defined by the clip member 21 and the wire member 22. Thus, top portion 20b of backboard member 20 is tilted back toward the rear of the vehicle.

Therefore, when the vehicle crashes, the rearward pivoting movement of the backboard member 20 prevents the arm member 4 from interfering with the backboard member 20 so that damage to backboard member 20 may be reduced or substantially eliminated.

In addition, for the present embodiment, under a normal state, backboard member 20 is forced in toward the front part of the vehicle by spring member 23, as shown in Fig. 1.

Therefore, when a passenger's head rests on headrest 5 or the passenger is seated deeply into front seat 16, even if arm member 4 rocks in the front to rear direction of the vehicle under a normal range of use, the spring member 23 expands and contracts thereby absorbing the load and preventing it from being transmitted to backboard member 20. Thus, the tilting of backboard member 20 toward the rear of the vehicle can be mitigated.

In addition, even if a relatively small load is applied to knee space 10 of backboard member 20 toward the front direction of the vehicle, such as when the knees of a passenger seated in the back seat come into contact with the backboard, the movement of backboard member 20 toward the front part of the vehicle can be prevented from getting transmitted to arm member 4 due to the contraction of spring member 23 and the rocking of headrest 5 can be mitigated, resulting in a better quality application of the headrest.

Furthermore, since top portion 20b of backboard member 20 and arm member 4 are connected via spring member 23, the number of parts required can be reduced and an increase in manufacturing costs can be curtailed, compared to when a linking member is used to connect them, and strange noises caused by loose parts can be mitigated, resulting in quieter operation.

In this manner, since the movement of arm member 4 is not hindered, the operation of the active headrest mechanism can be carried out smoothly.

A detailed explanation has been provided above for an embodiment of the present invention with reference to the drawings, but the concrete constitution is not restricted to this embodiment or any embodiment and changes in the design can be included in the present invention as long as they do not deviate from the contents of the present invention.

In other words, for the active headrest structure for Embodiment 1, an explanation was provided using aforementioned spring member 23 for the elastic member, but the present invention is not necessarily restricted to such a member and top portion 20b of backboard member 20 and arm member 4 can be connected by using rubber or the like that can be elastically deformed for the elastic member and there is no particular restriction as to the shape, amount, or material used for the elastic member. Indeed, it is envisaged that a non-elastic, non-resilient member may be used to connect the arm member and the backboard member.

The present application claims priority from Japanese Application No. 2005-125097, filed on 22nd April 2005, the contents of which are incorporated herein by reference.

## Claims

1. An active headrest arrangement for a seat of a vehicle comprising:
means for moving a headrest mounted above the seat generally towards a front of the vehicle when a load is applied thereto; and
means for moving a backboard or the like mounted to a back of the seat generally towards a rear of the vehicle.

2. An active headrest arrangement as claimed in claim 1 comprising:
a seat back frame member;
an arm member movably connected to the seat back frame member;
a headrest support member connected to the arm member;
a headrest connected to the headrest support member; and
a backboard member disposed on a back surface of the seat back and spaced from the arm member, the backboard member being movably connected to the seat back frame member at a lower portion thereof, and
a connecting member connecting the backboard member to the arm member.

3. A seat having an arrangement as claimed in claim 1 or claim 2 comprising:
a seat back;
a headrest disposed on the upper portion of the seat back;
an arm member disposed inside of the seat back;
a headrest support member that supports the headrest;
a backboard member disposed on the back surface of the seat back, the backboard member being movably connected to the seat back frame member at a lower portion thereof; and
a connecting member connecting the backboard member to the arm member.

4. An arrangement or a seat as claimed in any preceding claim wherein the connecting member is an elastic member.

5. An arrangement or a seat as claimed in claim 4 wherein the elastic member comprises a spring member or a rubber member that can be elastically deformed.

6. An arrangement or a seat as claimed in claim 4 or claim 5 wherein the backboard member is biased towards the front of the vehicle when in a normal state by the elastic member.

7. A method of operating an active headrest arrangement for a seat of a vehicle, comprising:
moving a headrest mounted above the seat generally towards a front of the vehicle when a load is applied to the seat; and
moving a backboard mounted to a back of the seat generally towards a rear of the vehicle substantially simultaneously.

8. A method as claimed in claim 7 wherein moving the headrest comprises:
supporting the headrest on an arm member movably connected to a seat frame back member; and
pivoting the headrest generally towards the front of the vehicle when a generally rearwardly directed load is applied to the arm member.

9. A method as claimed in claim 7 or claim 8 wherein moving the backboard comprises:
pivotally connecting the backboard at one end to the seat back;
connecting the backboard and the arm member with an connecting member; and
pivoting the backboard generally towards the rear of the vehicle when a generally rearwardly directed load is applied to the arm member.

10. A vehicle having an arrangement, a seat or using a method as claimed in any preceding claim.
